(19) Europäisches Patentamt
European Patent Office
Office européen des brevets

(11) **EP 2 978 175 A1**

(12) # EUROPEAN PATENT APPLICATION

(43) Date of publication:
**27.01.2016 Bulletin 2016/04**

(21) Application number: **15175816.6**

(22) Date of filing: **08.07.2015**

(51) Int Cl.:
*H04L 12/721* [(2013.01)]  *H04L 12/717* [(2013.01)]

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **25.07.2014 MY PI2014702054**

(71) Applicant: **Telekom Malaysia Berhad 50672 Kuala Lumpur (MY)**

(72) Inventors:
• **WAHID, Ahmad Syamil 43900 Sepang, Selangor (MY)**
• **MD. DESA, Jalil 47100 Pusat Bandar Puchong, Selangor (MY)**
• **ASRAF, Noor Mohammed 46200 Petaling Jaya, Selangor (MY)**
• **DAUD, Wan Noorashikeen 40460 Shah Alam, Selangor (MY)**
• **MOHD NOR, Yante 43000 Kajang, Selangor (MY)**

(74) Representative: **Viering, Jentschura & Partner mbB Patent- und Rechtsanwälte Grillparzerstrasse 14 81675 München (DE)**

(54) **A METHOD OF COMMUNICATING INFORMATION OVER A NETWORK AND A SYSTEM FOR COMMUNICATING INFORMATION OVER A NETWORK**

(57) A method (100) of communicating information over a network (306) is described. The method (100) comprises the steps of providing (102) at least one traffic distribution controller (308) arranged to communicate information between a source (302) and a destination (304) over the communications network (306). The controller (308) is implemented to perform software-based routing based on a software defined networking paradigm. The method (100) also comprises determining (104) a plurality of routes between the source (302) and the destination (304) within the network (306) and assigning (106) a plurality of route quality values to each of the plurality of routes based on a determination of a plurality of qualities of each of the plurality of routes. The method (100) also comprises comparing (108) the route quality values of each of the plurality of routes, determining (110) a non-dominated set of the routes based on the step of comparing the route quality values of each of the plurality of routes, and selecting (112) a route from the non-dominated set of routes for communicating the information over the selected route.

Figure 2

EP 2 978 175 A1

## Description

Field of the Invention

The present invention relates to a method of communicating information over a network, and to a network communication system.

Background of the Invention

Network path computation or routing in virtual networks differs from routing that is performed using specialized hardware and network operating systems. In the latter approach, the network operating system, often embedded within the network equipment, determines the route taken by a packet. Route tables stored in specialized hardware, such as an application-specific integrated circuit (ASIC), facilitate the processing of routes. However, in the case of virtual routers that run over a hypervisor, network interfaces and ports are abstracted and need to effectively interface with physical interfaces. Unlike the embedded network operating system in a typical router, the controller for a virtual router can be decoupled from the machine that hosts the virtual router and be hosted separately. The separation of functionalities (i.e. control of routes from forwarding) is known as Software Defined Networking, based on an emerging network design paradigm. Further, existing routing algorithms are not fully suitable to perform routing for virtual routers.

A typical label switched network consists of a sequence of label switching equipment that route packets to their destinations. This involves establishing a route encompassing client terminals and intermediate equipment that switch the flow of data to corresponding destinations. The path computation is determined by adding labels to routing headers indicating the type of payload being transported and its next hop. These labels are interpreted by label switching devices (using standards such as GMPLS, MPLS) for packet forwarding. Several types of services and media that peruse label switched networks impose specific quality of service (QoS) requirements, which need to be fulfilled in order to transport the packet to its intended destination. While the labels can represent policy information, they do not include dynamically modified application specific information or a centralized control of such a method. For example, these methods cannot be used for blocking a specific application without any additional security products. Meeting such requirements remains part of most service provider Service Level Agreements (SLA). However, such networks are not entirely suitable to tag multiple traffic requirements simultaneously. Additionally, there is usually only a single route available for data transmission that fulfils a limited number of traffic criteria.

Subsequently, the adoption of cloud-based service delivery models has seen network equipment deployed as virtual machines (i.e. a software instance) over a hypervisor. Virtualising networking that is based on application requirements offers many economic advantages such as rapid scalability, configuration and management since the network equipment is run as software. However, such a mode of delivery can also impose stress due to a concentration of traffic at a specific point in the network.

Summary of the Invention

In accordance with a first aspect of the present invention, there is provided a method of communicating information over a network, the method comprising the steps of:

providing at least one traffic distribution controller arranged to communicate information between a source and a destination over a communications network, the controller being arranged to perform software-based routing based on a software defined networking paradigm;
determining a plurality of routes between the source and the destination within the network;
assigning a plurality of route quality values to each of the plurality of routes based on a determination of a plurality of qualities of each of the plurality of routes;
comparing the route quality values of each of the plurality of routes;
determining a non-dominated set of the routes based on the step of comparing the route quality values of each of the plurality of routes; and
selecting a route from the non-dominated set of routes for communicating the information over the selected route.

Selecting a route from a non-dominated set of routes facilitates selection of an appropriate route without necessarily requiring a narrow set of criteria (or giving up on the quality of another criteria) to be satisfied. It will be appreciated that any route of the non-dominated set of routes may be selected. If network conditions change, then a further route of the non-dominated set of routes may be selected. Further, routes that are part of the non-dominated set may be ranked relative to one another, and selection of the route may be based on the ranking of the route.

The plurality of routes between the source and the destination within the network may be determined by performing a topology discovery process. The topology discovery process may comprise an open shortest path first (OSPF) process. Requirements of users of the network may also be determined, along with quality of service (QoS) requirements, for example using an extensible Markup Language (XML)-based network management protocol, a network configuration protocol (NETCONF) and/or a simple network management protocol (SNMP). Information obtained during these steps may be stored in a database, for example a relational database. It will be appreciated that the routes discovered at this stage are potential routes for selection.

Assigning the plurality of route quality values to each of the plurality of paths may comprise using an objective function to evaluate each of the plurality of routes and assigning a share score as an indicator of the quality of each evaluated route. A share score can also be used to determine a tie if the quality values of a plurality of routes are the same. The plurality of route quality values may be component parameters of the objective function. In one example, the component parameters of the objective function for each route relates to one or more of the group comprising: a time delay associated with communicating the information over the route, a bandwidth associated with the route, a hop count associated with the route, and information associated with the availability of service of the route.

In one embodiment, when comparing the route quality values of each of the plurality of routes, the plurality of route quality values are not combined.

In accordance with a second aspect of the present invention, there is provided a system for communicating information over a network, the system comprising at least one traffic distribution controller arranged to communicate information between a source and a destination over a communications network; wherein the controller is arranged to perform software-based routing based on a software defined networking paradigm, the controller being further arranged to:

> determine a plurality of routes between the source and the destination within the network;
> assign a plurality of route quality values to each of the plurality of routes based on a determination of a plurality of qualities of each of the plurality of routes:

>> compare the route quality values of each of the plurality of routes;
>> determine a non-dominated set of the routes based on the step of comparing the route quality values of each of the plurality of routes; and
>> select a route from the non-dominated set of routes for communicating the information over the selected route.

The controller may be arranged to rank routes that are part of the non-dominated set relative to one another, and to select a route based on the ranking of the route.

The controller may be arranged to determine the plurality of routes between the source and the destination within the network by performing a topology discovery process. Alternatively, the plurality of routes between the source and the destination within the network may be provided. The topology discovery process may comprise an open shortest path first (OSPF) process. Requirements of users of the network may also be determined, along with quality of service (QoS) requirements, for example using an extensible Markup Language (XML)-based network management protocol, a network configuration protocol (NETCONF) and/or a simple network management protocol (SNMP). The system may be arranged to store information obtained during these steps in a database, for example a relational database. It will be appreciated that the routes discovered at this stage are potential routes for selection.

The controller may be arranged to assign the plurality of route quality values to each of the plurality of paths by using an objective function to evaluate each of the plurality of routes and assigning a share score as an indicator of the quality of each evaluated route. A share score can also be used to determine a tie if the quality values of a plurality of routes are the same. The plurality of route quality values may be component parameters of the objective function. In one example, the component parameters of the objective function for each route relates to one or more of the group comprising: a time delay associated with communicating the information over the route, a bandwidth associated with the route, a hop count associated with the route, and information associated with the availability of service of the route.

The controller may be arranged such that, when comparing the route quality values of each of the plurality of routes, the plurality of route quality values are not combined.

Brief Description of the Figures

Embodiments of the present invention will now be described, by way of example only, with reference to the accompanying figures, in which:

> Figure 1 is a flow chart of a method of communicating information over a network in accordance with an embodiment of the present invention;

> Figure 2 is a flow chart of a method of communicating information over a network in accordance with an embodiment of the present invention; and

> Figure 3 is a block diagram of a system for conducting the method of Figure 1 or Figure 2.

Detailed Description

Embodiments of the present invention facilitate the selection of routes in a network, and are appropriate for virtualized networks and services that run on hypervisors, which pose different and additional challenges than those that run directly on servers.

Unlike the embedded network operating system in a typical router, the controller for a virtual router can be decoupled from the machine that hosts the virtual router and be hosted separately. The separation of functionalities (i.e. control of routes from forwarding) is known as Software Defined Networking, based on an emerging network design paradigm. Embodiments of the present invention route a plurality of routing criteria in order to provide flexibility and improve network performance.

Further, and as discussed earlier, existing networking methods cannot be used for blocking a specific application without any additional security products. Meeting such requirements remains part of most service provider Service Level Agreements (SLA). However, such networks are not entirely suitable to tag multiple traffic requirements simultaneously. Applying embodiments of the present invention with a centralised controller can be advantageous in addressing the limitations posed by existing networking methods.

Embodiments provide a centralised network controller and a route selection method that can be modified to suit specific needs of the user to manipulate the network, and can be used to optimise different routing and application criteria. For example, different applications typically have specific service policies which, when directly manipulated via a controller, can present economic advantages.

Further, embodiments of the present invention relate to designing networks that are responsive to applications and applying dynamic policies in such conditions. In some embodiments, the system comprises one or more traffic distribution controllers that are arranged to distribute traffic between a client device and its destination via a less congested route. The controller with the disclosed implementation typically performs software-based routing based on a software defined networking paradigm. Algorithms implemented within the controller facilitate the controller in computing policy and ranking routing decisions for virtualized cloud-based routers and switches, and can be defined to provide additional virtualised network services such as firewall and anti-virus functions.

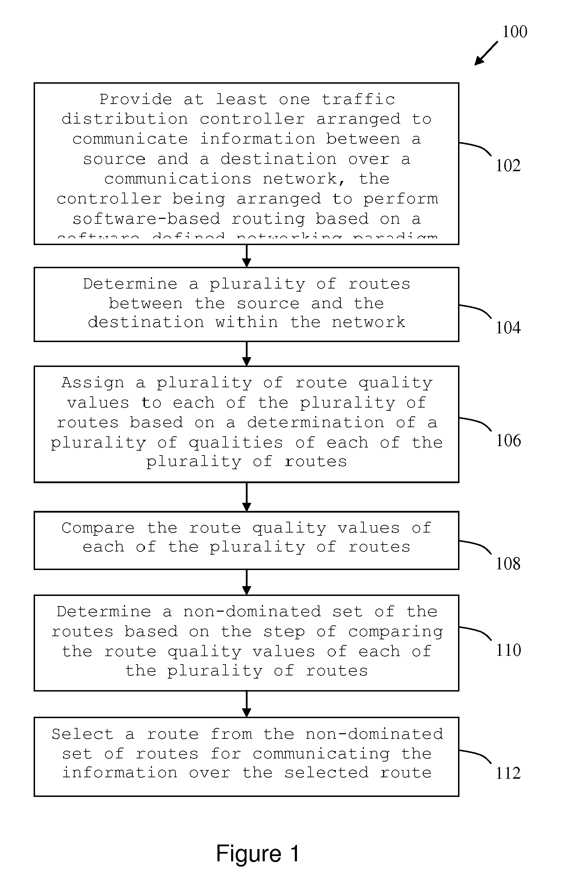

Figure 1 is a flow chart showing a method 100 of communicating information over a network in accordance with an embodiment of the present invention. The method 100 comprises a first step 102 of providing at least one traffic distribution controller arranged to communicate information between a source and a destination over a communications network. The controller is arranged to perform software-based routing based on a software defined networking paradigm.

In a second step 104, a plurality of routes between the source and the destination within the network are determined. The plurality of routes between the client device and the destination within the network may be determined by performing a topology discovery process. In this example, the topology discovery process comprises an open shortest path first (OSPF) process. Requirements of users of the network are also determined, along with quality of service (QoS) requirements. This can be achieved using any appropriate technique, for example by using an extensible Markup Language (XML)-based network management protocol, a network configuration protocol (NETCONF) and/or a simple network management protocol (SNMP). Information associated with the routes obtained during these steps can be stored in a relational database, and routes discovered at this stage are potential routes for selection.

In a third step 106, a plurality of route quality values are assigned to each of the plurality of routes based on a determination of a plurality of qualities of each of the plurality of routes. In this example, the step 106 of assigning the plurality of route quality values to each of the plurality of paths comprises using an objective function to evaluate each of the plurality of routes and assigning a share score as an indicator of the quality of each evaluated route. The plurality of route quality values may be component parameters of the share value function.

In a fourth step 108, the route quality values of each of the plurality of routes are compared so as to determine, in step 110, a non-dominated set of the routes. In this example, when comparing the route quality values of each of the plurality of routes, the plurality of route quality values are not combined.

Determining 100 a non-dominated set of the routes facilitates selecting a route from the non-dominated set of routes without necessarily requiring a narrow set of criteria to be satisfied. It will be appreciated that any route of the non-dominated set of routes may be selected and, if network conditions change, then a further route of the non-dominated set of routes may be selected.

In step 112, a route from the non-dominated set of routes is selected for communicating the information over the selected route.

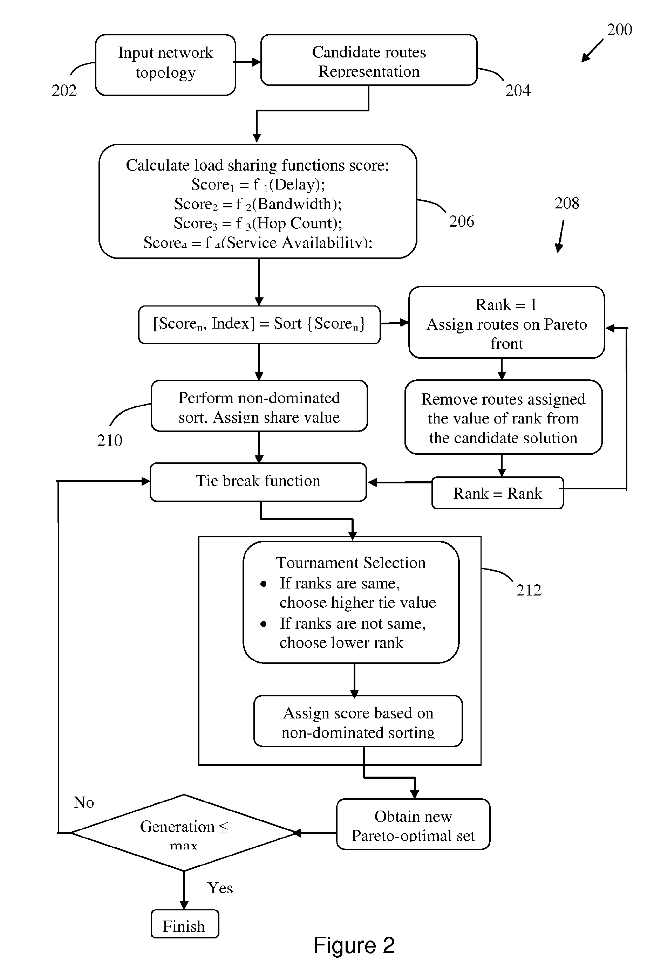

A specific method 200 of communicating information over a network will now be described with reference to Figure 2 and the below pseudo-code.

Given:

$n_i$ - Number of solutions dominated by $i$
$s_i$ - set of solutions that are dominated by $i$
$P$ - set of all non-dominated solutions
Input: Network scenario G (V, E), a source and destination(s)
Output: Set of Pareto-optimal routes

Begin

1. Perform topology discovery to obtain candidate routes
2. Map routes with routing & application information to prioritize routes
3. Assume initial solution based on these generated routes
4. Initialise load sharing functions
5. Load Share value $eval(f_k(v_i))$ where, k = 1, 2... q, and $\forall\, i \in popSize$
6. Calculate share values for each function
7. Non-dominated sort (P)
// iterate for all the candidate routes
8. While $P \neq \{\,\}$ do
9. For each solution i iin the Pareto front
10. If ($i$ dominates $j$)

// add *j* to the set of solutions dominated by *i*
11.

$$S_i = S_i \cup \{j\}$$

12. Else If (*j* dominates *i*)
// increment domination counter for *i*
13.

$$n_i = n_i + 1$$

14. End-If
// *i* belongs to the first Pareto front
15. If $n_i = 0$
16.

$$r_i \leftarrow rank$$

17.

$$P \leftarrow P \setminus \{v_i | r_i = rank\}$$

18.

$$rank \leftarrow rank + 1$$

19. Add *i* to the set of solutions in the first Pareto front
20. End-If
21. Tie break function for routes with same share values
22. Initialise distance = 0
23. For k = 1 to q
// sort share values in ascending order
24. Sort (*ranks,>*)
// set boundary solutions to ∞
25.

$$d_1^k = d_k^{popSize} \leftarrow \infty$$

// difference between the maximum and minimum
// values of objective *i* the current population
26.

$$d_k^j = \frac{d_k^{j+1} - d_k^{j-1}}{\left(f_i^{max} - f_i^{min}\right)}, j = 2, \dots popSize - 1$$

// sum of individual shares
27.

$$d_i \leftarrow \sum_{k=1}^{q} d_k^i, \forall i \in popSize$$

// corresponding to each objective
28. If there is a change in route
29. Update mapping of routes with weights to prioritize routes and share functions
30. Re-calculate share values
31. Choose solutions with lower rank
// solutions lie in the same front
32. If ($r_i=r_j$)
33.

$$Choose \ d_i > d_j$$

34. Else
// individual with smaller rank
35.

$$Choose \ r_i < r_j$$

36. End-If
37. Add the new set of strings to Pareto set
38. End-While
39. Obtain new set of routes to generate a new routing table
40. Until no change in *eval(f$_k$(v$_i$))* || (Number of share value computations ≤ maximum number of share value computations)

As described in the above pseudo-code, and shown in Figure 2, the method 200 comprises a sequence of steps undertaken from gathering routing states to obtaining routing decisions indicating alternative routes through which to distribute traffic. Advantageously, the method 200 facilitates redirecting traffic to less congested links and/or network devices based on service and application availability. Congestion can occur due to multiple requests to virtualized routers from client devices.
The method 200 begins with a topology discovery process 202 (using a method such as OSPF) and gathers user requirements representing the service and QoS requirements (using a method such as XML, NETCONF and SNMP). This information is stored in a relational database and combined to represent 204 as a candidate solution as discovered routes are potential routes. Without such a combination, these routes would otherwise lack the insight of the service and QoS requirements, as there are no previously existing mechanisms to simultaneously combine both. The candidate routes are evaluated based on load share value equations.

A objective function 206 is used to evaluate candidate routes and assign a load share score as an indicator of the quality of the route considered. Candidate routes constitute hops in the network, with assigned application and policy settings that are associated with the hops. The component parameters of the share value function are not, in this example, combined as a weighted sum as this can result in a particular metric being biased. By not combining the share functions, the disclosed traffic distribution problem can be solved using a Pareto-based process. Further, given that the QoS metrics may be conflicting and interdependent in nature, it may not be possible to adequately provide a trade-off between the share values by adjusting the correct weights. Therefore, once a non-dominated set is obtained, a user is able to select a particular route based on one or more particular trade-offs rather than weighting of share functions.

For routes requiring multiple criteria, not all the criteria may be considered simultaneously as adhering to one criterion may degrade the quality of the solution obtained.

A non-dominated route is obtained 208 based on the relative share value scores. A given candidate path (A) is assigned a non-dominated rank if it dominates (has a higher rank) another candidate path (B) while at the same time A is not worse than B in all the other share functions. The solutions in the Pareto set are assigned a score based on the degree of dominance in the candidate paths and sorted in increasing order 210.

A tie-break function 212 can be used in cases where two routes have a same share function value. In such cases, the difference between the component share function value and its previous value are obtained. For example, if the share values of two candidate's values are the same, then their value and its preceding rank are taken. The candidate route with the largest share value is considered as the higher rank. This function ensures that suitable paths are considered, which in turn can be used as additional options by the source to reach its destination.

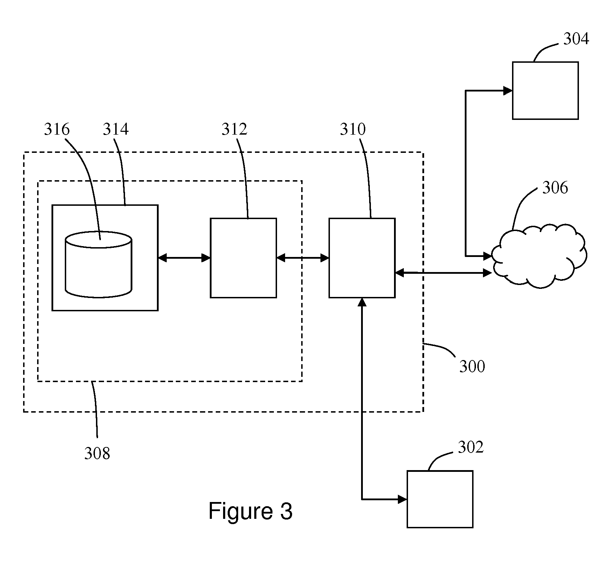

The methods 100, 200 described above can be implemented by a communications system 300 as shown in Figure 3. The communications system 300 facilitates communicating information from a source 302, such as a first personal computer or other computing device, to a destination 304, such as a second personal computer or other computing device. The information to be communicated is sent to the communication system 300, and then via a network 306, such as the internet.

It will be appreciated that the system 300 may be any appropriate computing device that is capable of implementing a virtual router to conduct the steps of the method 100, 200. In this example, the system 300 comprises a traffic distribution controller 308 arranged to communicate the information between the source 302 and the destination 304 over the network 306. The controller 308 is arranged to perform software-based routing based on a software defined networking paradigm. As such, in this example, the controller is arranged to communicate via a network interface 310, and comprises a processor 312 and memory 314.

Computer instructions that may be required to implement software routing functions of the controller 308, and that are executed by the processor 312, are stored in the memory 314 of the controller 308. In this example, the memory 314 also comprises a database 316, which may store information associated with routes obtained during steps of the method 100, 200. In this example, the database 316 is a relational database, and includes information associated with routes that are potential routes for selection.

The system 300 is arranged to carry out the steps of the method 100, 200. In particular, the controller 308 is arranged to determining a plurality of routes between the source 302 and the destination 304, and to assigning a plurality of route quality values to each of the plurality of routes based on a determination of a plurality of qualities of each of the plurality of routes. The controller 308 is also arranged to compare the route quality values of each of the plurality of routes, to determine a non-dominated set of the routes based on the step of comparing the route quality values of each of the plurality of routes, and to select a route from the non-dominated set of routes for communicating the information over the selected route.

Numerous variations and modifications will suggest themselves to persons skilled in the relevant art, in addition to those already described, without departing from the basic inventive concepts. All such variations and modifications are to be considered within the scope of the present invention, the nature of which is to be determined from the foregoing description.

In the description of the invention, except where the context requires otherwise due to express language or necessary implication, the words "comprise" or variations such as "comprises" or "comprising" are used in an inclusive sense, i.e. to specify the presence of the stated features, but not to preclude the presence or addition of further features in various embodiments of the invention.

**Claims**

1. A method (100) of communicating information over a network (306), the method (100) comprising the steps of:

   providing (102) at least one traffic distribution controller (308) arranged to communicate information between a source (302) and a destination (304) over a communications network (306), the controller (308) being arranged to perform software-based routing based on a software defined networking paradigm;
   determining (104) a plurality of routes between the source (302) and the destination (304) within the network (306) ;

assigning (106) a plurality of route quality values to each of the plurality of routes based on a determination of a plurality of qualities of each of the plurality of routes:

comparing (108) the route quality values of each of the plurality of routes;

determining (110) a non-dominated set of the routes based on the step of comparing the route quality values of each of the plurality of routes; and

selecting (112) a route from the non-dominated set of routes for communicating the information over the selected route.

2. The method (100) of claim 1, wherein routes that are part of the non-dominated set are ranked (210) relative to one another, and wherein selection (112) of the route is based on the ranking of the route.

3. The method (100) of claim 1 or claim 2, wherein the plurality of routes between the source and the destination within the network are determined (104) by performing a topology discovery process, wherein preferably requirements of users of the network are also determined, along with quality of service (QoS) requirements.

4. The method (100) of claim 3, wherein information obtained in respect of the routes is stored in a database.

5. The method (100) of any one of the preceding claims, wherein assigning (106) the plurality of route quality values to each of the plurality of paths comprises using an objective function (206) to evaluate each of the plurality of routes and assigning a share score as an indicator of the quality of each evaluated route, wherein preferably the plurality of route quality values are component parameters of the objective function (206).

6. The method (100) of claim 5, wherein the component parameters of the objective function (206) for each route relates to one or more of the group comprising: a time delay associated with communicating the information over the route, a bandwidth associated with the route, a hop count associated with the route, and information associated with the availability of service of the route.

7. The method (100) of any one of the preceding claims, wherein, when comparing (108) the route quality values of each of the plurality of routes, the plurality of route quality values are not combined.

8. A system (300) for communicating information over a network (306), the system (300) comprising at least one traffic distribution controller (308) arranged to communicate information between a source (302) and a destination (304) over a communications network (306); wherein

the controller (308) is arranged to perform software-based routing based on a software defined networking paradigm, the controller (308) being further arranged to:

determine (104) a plurality of routes between the source (302) and the destination (304) within the network (306);

assign (106) a plurality of route quality values to each of the plurality of routes based on a determination of a plurality of qualities of each of the plurality of routes:

compare (108) the route quality values of each of the plurality of routes;

determine (110) a non-dominated set of the routes based on the step of comparing the route quality values of each of the plurality of routes; and

select (112) a route from the non-dominated set of routes for communicating the information over the selected route.

9. The system (300) of claim 8, wherein the controller (308) is arranged to rank (210) routes that are part of the non-dominated set relative to one another, and to select (112) a route based on the ranking of the route.

10. The system (300) of claim 8 or 9, wherein the controller (308) is arranged to determine the plurality of routes between the source (302) and the destination (304) within the network (306) by performing a topology discovery process, wherein preferably the controller (308) is also arranged to determine requirements of users of the network (306), along with quality of service (QoS) requirements.

11. The system (300) of claim 10, further being arranged to store information obtained in respect of the routes in a database (316).

12. The system (300) of any one of claims 8 to 11, wherein the controller (308) is arranged to assign the plurality of route quality values to each of the plurality of paths by using an objective function (206) to evaluate each of the plurality of routes and assigning a share score as an indicator of the quality of each evaluated route.

13. The system (300) of claim 12, wherein the plurality of route quality values are component parameters of the objective function (206).

**14.** The system (300) of claim 13, wherein the component parameters of the objective function (206) for each route relates to one or more of the group comprising: a time delay associated with communicating the information over the route, a bandwidth associated with the route, a hop count associated with the route, and information associated with the availability of service of the route.

**15.** The system (300) of any one of claims 8 to 14, wherein the controller (308) is arranged such that, when comparing (108) the route quality values of each of the plurality of routes, the plurality of route quality values are not combined.

100

Provide at least one traffic distribution controller arranged to communicate information between a source and a destination over a communications network, the controller being arranged to perform software-based routing based on a software defined networking paradigm

102

Determine a plurality of routes between the source and the destination within the network

104

Assign a plurality of route quality values to each of the plurality of routes based on a determination of a plurality of qualities of each of the plurality of routes

106

Compare the route quality values of each of the plurality of routes

108

Determine a non-dominated set of the routes based on the step of comparing the route quality values of each of the plurality of routes

110

Select a route from the non-dominated set of routes for communicating the information over the selected route

112

Figure 1

200

202 — Input network topology → Candidate routes Representation — 204

Calculate load sharing functions score:
$Score_1 = f_1(Delay)$;
$Score_2 = f_2(Bandwidth)$;
$Score_3 = f_3(Hop\ Count)$;
$Score_4 = f_4(Service\ Availability)$: — 206

208

$[Score_n, Index] = Sort \{Score_n\}$ → Rank = 1
Assign routes on Pareto front

Perform non-dominated sort. Assign share value — 210

Remove routes assigned the value of rank from the candidate solution

Tie break function ← Rank = Rank

Tournament Selection
• If ranks are same, choose higher tie value
• If ranks are not same, choose lower rank — 212

Assign score based on non-dominated sorting

No

Generation ≤ max ← Obtain new Pareto-optimal set

Yes

Finish

Figure 2

Figure 3

Europäisches
Patentamt

European
Patent Office

Office européen
des brevets

# EUROPEAN SEARCH REPORT

Application Number

EP 15 17 5816

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2013/059683 A1 (SMITH BRADLEY R [US]) 25 April 2013 (2013-04-25) * page 7, line 27 - page 8, line 7; figures 1,7,9 * * page 10, line 1 - line 9 * * page 11, line 9 - page 16, line 11 * | 1-15 | INV. H04L12/721 H04L12/717 |
| X | BENMOHAMED JOHNS HOPKINS UNIVERSITY C LIANG JOHNS HOPKINS UNIVERSITY E NABER JOHNS HOPKINS UNIVERSITY A TERZIS JOHNS HOPKINS UNIVE: "QoS Enhancements to BGP in Support of Multiple Classes of Service; draft-liang-bgp-qos-00.txt", 5. JCT-VC MEETING; 96. MPEG MEETING; 16-3-2011 - 23-3-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/, INTERNET ENGINEERING TASK FORCE, IETF, CH, 19 June 2006 (2006-06-19), XP015046059, ISSN: 0000-0004 * page 2, paragraph Section 2 "BGPv4 Enhancements" - page 6 * | 1-15 | |
| X | EP 2 237 494 A1 (BRITISH TELECOMM [GB]) 6 October 2010 (2010-10-06) * paragraph [0004] - paragraph [0056]; figures 1-4 * | 1-15 | TECHNICAL FIELDS SEARCHED (IPC) H04L H04W |

The present search report has been drawn up for all claims

| Place of search | Date of completion of the search | Examiner |
|---|---|---|
| The Hague | 23 November 2015 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 15 17 5816

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2015

| Patent document cited in search report | | Publication date | Patent family member(s) | | Publication date |
|---|---|---|---|---|---|
| WO 2013059683 | A1 | 25-04-2013 | US | 2014241366 A1 | 28-08-2014 |
| | | | WO | 2013059683 A1 | 25-04-2013 |
| EP 2237494 | A1 | 06-10-2010 | EP | 2237494 A1 | 06-10-2010 |
| | | | WO | 2010112802 A1 | 07-10-2010 |

EPO FORM P0459

For more details about this annex : see Official Journal of the European Patent Office, No. 12/82